# EUROPEAN PATENT SPECIFICATION

(11) **EP 3 301 139 B1**
(45) Date of publication and mention of the grant of the patent: **01.05.2019**
(21) Application number: 17194101.6
(22) Date of filing: 29.09.2017
(51) Int. Cl.: C09G 3/00

(54) **SKI WAX**
SKIWACHS
CIRE POUR SKI

(30) Priority: 30.09.2016 NO 20161574
(43) Date of publication of application: 04.04.2018
(73) Proprietor: Brav Norway AS, 0411 Oslo (NO)
(72) Inventor: GLØGÅRD, Christian, N-1482 Nittedal (NO); SMEVOLD, Terje, N-0963 Oslo (NO)
(74) Representative: Onsagers AS

(56) References cited:
- EP-A1- 2 292 704
- EP-A1- 2 894 214
- DE-A1-102014 119 567
- DE-B3-102011 116 342
- US-A1- 2006 107 870

## Description

### FIELD OF INVENTION

The present invention relates to a novel ski wax/klister composition comprising graphene. The invention further relates to a method for the preparation of said composition and the use thereof.

### BACKGROUND OF THE INVENTION

Different wax and klister compositions are applied to the kick zone of skis to provide grip for cross country skiing. The compositions are adapted for different snow conditions and temperatures. Generally hard waxes are used at low temperatures while soft waxes and klister are used at higher snow temperatures and wet snow. Other wax compositions comprising different combinations of paraffin wax, synthetic wax, and optionally fluorinated paraffin wax are used as gliders.

WO 2004/065506 A1 discloses grip wax for skis comprising a high molecular weight poly-iso-butylene base, rosin alcohol or various modifications thereof as grip material and wax as glide material, where the content of high molecular weight base in the grip wax is more than 50 %.

US 2006/0107870 discloses a wax formulation formulated from natural waxes and including soy wax as a primary component in combination with other naturally occurring waxes and oils. Colorants may be included, as well as traction enhancing components such as graphite.

The self-lubricating and dry lubricating properties of graphite and also fluorinated graphite have been used in compositions to improve gliding/sliding abilities of skis, mono-skis, snowboards and the like. Such application of graphite is known from e.g. JP 2011231301 A, JPH 03157497 A and JPH 03157494.

DE 102011116342 concerns the use of graphene for modifying the tribological sliding properties of winter sports equipment.

Lubrication compositions comprising graphene in waxes, e.g. polyethylene wax, are known e.g. CN 102628221, CN 102604714 and US 2011/0046027. EP2527014 concerns a ski sole comprising graphene.

Carbon has several different allotropes having different chemical and physical properties. Diamond and graphite are well known allotropes of carbon, however several others exist such as buckyballs/fullerene, nanotubes, amorphous carbon and graphene.

Planar sheets of carbon atoms arranged in a honeycomb lattice and stacked in a layered structure constitute graphite. A single layer, one atom thick, of graphite is called graphene and has exceptional electrical, thermal and physical properties. Graphene has a 2 dimensional structure while the graphite structure is 3 dimensional. Thus graphene is crystalline allotrope of carbon where the carbon atoms are packed in a regular sp²-bonded hexagonal pattern. The thermal conductivity of graphene is much higher than in other carbon allotropes, and is about 5 times higher than in graphite.

### SUMMARY OF THE INVENTION

The present invention provides grip/kick wax/klisters with improved properties comprising grapheme.

Wax of different compositions is applied to the kick zone of skis, to improve their griping abilities and at the same time maintain the gliding abilities.

In competitions which are decided by margins of 1/10 or 1/100 of a second, there is a constant demand for improvements of waxes for the different events.

The present invention is defined in the appended claims.

### DETAILED DESCRIPTION OF THE INVENTION

Addition of graphene and other carbon additives as e.g. graphite have previously been associated with improved gliding properties when applied to winter sports equipment. It has now surprisingly been found that the addition of small amounts of graphene in ski wax/klister improve the gripping properties of the ski wax/klister for cross country skiing and at the same time keeping the gliding properties of the ski wax/klister.

The present invention provides ski waxes matrixes of soft and hard dry waxes and klister comprising graphene. Graphene possesses properties like high tensile strength (up to 130 GPa), low density (0.03-0.1 mg/cm²) combined with high specific surface (600-2630 m²/g) which makes the material interesting as a nano filler. The addition of graphene alters the physical-chemical characteristics and properties of the wax matrixes.

For grip waxes and klister according to the invention the working temperature range are expanded, the icing properties are improved, improved wear resistance, and the uptake of dirt and particles from the snow is reduced. Surprisingly, the grip/kick properties are improved compared to similar composition without graphene. This is explained by increased specific surface area of the wax/klister containing graphene.

Ski wax compositions according to the present invention also have improved application properties.

The present invention concerns a ski wax/klister formulation comprising graphene. Graphene is added to a wax/klister matrix where the amount of graphene added is in the range of 0.05 to 1 % by weight, 0.1 to 1 % by weight, 0.1 to 0.8 %, 0.1 to 0.5 % by weight, 0.2 to 1 % by weight, 0.2 to 0.8 % by weight, 0.2 to 0.5 % by weight, 0.25 to 5 % by weight, 0.25 to 0.8 % by weight, 0.25 to 0.5 % by weight, 0.3 to 1 % by weight, 0.3 to 0.8 % by weight or 0.3 to 0.5 % by weight.

When the content of graphene exceeds 1% by weight in a wax/klister formulation the wax/klister gets too hard to be applied to the ski sole.

Any graphene may be used. However, the dispersion properties are improved with residual oxygen content in the range 5-20 %. The graphene additive may for instance be prepared from graphene oxide by thermal reduction according to the method as disclosed by Wang et al. (Chem. Commun., 2012, 48, 976-978).

Any wax, synthetic resins, natural or synthetic waxes, paraffin, fluorinated paraffin, fluorinated hydrocarbons, perfluorinated compounds or mixtures thereof, that can be mixed uniformly with the graphene, may be used as matrix in the present invention.

The matrix materials are formulated to optimise characteristics and properties in the respective temperature areas. For ski waxes this means that characteristics like hardness and hydrophobic properties are varied to achieve the desired properties in each temperature area.

Paraffin waxes or mixtures of paraffin waxes with melting point in the range of 45 to 68 °C and/or a carbon chain length of C12 to C85, preferably C20 to C85 may be used. Fluorinated hydrocarbons with various degrees of fluorination are also useful as basis material.

Synthetic resins useful as basis material in the present invention are such as methyl methacrylate, ethyl acrylate, acrylonitrile, vinyl acetate, styrene polypropylene, polypropylene oxide, atactic polymers and ethylene oxide polymers.

Synthetic waxes such as polyethylene waxes (high molecular weight or ultra high molecular weight polyethylene), Fischer-Tropsch waxes are also useful as components in the matrix material. Synthetic waxes used have a molecular weights up to 10 000 Dalton.

Natural waxes like soy wax, bees wax, carnuba, palm wax, candellila wax, castor wax and mixtures thereof are also suited for the present invention.

The different waxes may be varied in relative amounts or could be combined with other waxes such as stearic acid, palm wax, orange peel wax, jojoba wax, bayberry wax, lanolin wax, or oils from plants, vegetables, fruits and nuts.

To give grip/kick wax/klister compositions strength and elasticity an additive selected from the group consisting of rosins, natural rubber, synthetic rubbers and combination thereof is added in an amount of 5-40 % by weight. A preferred synthetic rubber is poly-iso-butylene (PIB). Addition of PIB in the range 5-40 % by weight, preferably 5-20% by weight, in combination with graphene in the range 0,05-5% by weight, preferably 0.1 to 2.0 % by weight, more preferred 0.1 to 1.0 % by weight, increases the elasticity and strength of the composition by as much as 50%.

In addition, synthetic high polymers such as e.g. poly-methacrylic acid ester or polyiso-butylene or ethyl vinyl acetate (EVA) may be added as stabilizers.

In an embodiment of the invention klister and grip wax is provided wherein the wax matrix comprises poly-iso-butylenes (5-40% by weight), Vaseline (5-20% by weight), resins (2-20% by weight), paraffin- and Fischer-Tropsch waxes (5-40% by weight). Graphene is added to a concentration of 0.05 to 1 % by weight, 0.1 to 1 % by weight, preferably 0.1 to 0.8 %, by weight, more preferred 0.1 to 0.5 % by weight, 0.2 to 1 % by weight, 0.2 to 0.8 % by weight, 0.2 to 0.5 % by weight, 0.25 to 5 % by weight, 0.25 to 0.8 % by weight, 0.25 to 0.5 % by weight, 0.3 to 1 % by weight, 0.3 to 0.8 % by weight or 0.3 to 0.5 % by weight.

In a further embodiment of the invention a dry wax composition is provided wherein the graphene is added into a matrix comprising poly-iso-butylenes (5-40% by weight), Vaseline (0-30% by weight), resins (0-25% by weight), paraffin- and Fischer-Tropsch waxes (5-70% by weight)

In a klister composition according to the invention the graphene is added into a matrix comprising poly-iso-butylenes (5-40 % by weight), Vaseline (0-20% by weight), resins (5-80% by weight), paraffin- and Fischer-Tropsch waxes (0-5% by weight)

The wax according to the invention may be prepared by melting the matrix constituents and heating the mixture to 120 to 150 °C. Graphene is added in portions under heavy stirring, preferably using high share dispersing equipment, until the desired graphene concentration is reached. The mixture is then cooled to 100-120 °C before filling.
Optionally, fluorinated waxes are added to the matrix melt under stirring until a homogenous mixture is obtained.

It should be understood that the wax composition according to the present invention may be prepared by any method known in the art.

The invention is verified by the following non-limiting examples.

### EXAMPLES

### Klister and Grip/Kick-wax containing graphene

The wax matrix was prepared by co-melting poly-iso-butylenes 5-40% by weight, Vaseline 5-20% by weight, resins 2-20% by weight, paraffin- and Fischer-Tropsch waxes 5-40% by weight in the required ratios to obtain desired product properties. The mixture was heated to 150 °C. Optionally a fluorinated wax may be added under stirring to obtain a homogenous mixture. Graphene was added in portions under heavy stirring until a final graphene concentration of 0.1-2.0% by weight was obtained. The mixture was cooled to 100-120 degrees C before filling.

### Field tests of Universal Klister containing graphene

Swix Universal Klister modified with 0.25% by weight graphene was tested against commercial Swix Universal Klister in 10 field tests. The test product was applied under one of the skies and the standard product under the other. The test pilots were assessing the products by rating the parameters below:
- Grip
- Working temperature and snow humidity area
- Slip
- Icing properties
- Wear properties
- Dirt uptake from the snow
- Application properties

The test product with 0.25% by weight graphene were rated better or equal to the standard product on all parameters in every test. Most noticeably is the broadening of the working temperature and snow humidity area, reduced icing and dirt uptake.

## Claims

1. Ski wax composition,
**characterised in that** it comprises graphene in a concentration of 0.05 to 1 % by weight, 0.1 to 1 % by weight, 0.1 to 0.8 %, 0.1 to 0.5 % by weight, 0.2 to 1 % by weight, 0.2 to 0.8 % by weight, 0.2 to 0.5 % by weight, 0.25 to 5 % by weight, 0.25 to 0.8 % by weight, 0.25 to 0.5 % by weight, 0.3 to 1 % by weight, 0.3 to 0.8 % by weight or 0.3 to 0.5 % by weight and an additive selected from the group consisting of rosins, natural rubber, synthetic rubbers and combination thereof in an amount of 5 to 40% by weight, preferably 5 to 20 % by weight in a wax matrix.

2. Composition according to claim 1,
**characterised in that** the wax matrix comprising poly-iso-butylenes 5-20% by weight, Vaseline 0-30% by weight, resins 0-25% by weight, paraffin- and Fischer-Tropsch waxes 5-70% by weight.

3. Composition according to claim 1,
**characterised in that** the matrix comprising poly-iso-butylenes 5-20 % by weight, Vaseline 0-20% by weight, resins 5-80% by weight, paraffin- and Fischer-Tropsch waxes 0-5% by weight.

4. Method for the preparation of the composition according to claims 1 to 3,
**characterised in that** it comprises the steps of
i) co-melting the wax matrix components,
ii) heating the melt to 120-150 °C
iii) optionally adding a fluorinated wax and/or a dry lubricant under stirring,
iv) adding graphene in portions under heavy stirring,
iv) cooling the composition.

5. Use of the composition according to claims 1 to 4 as a ski wax.

## Patentansprüche

1. Skiwachszusammensetzung,
**dadurch gekennzeichnet, dass** sie Graphen in einer Konzentration von 0,05 bis 1 Gew.-%, 0,1 bis 1 Gew.-%, 0,1 bis 0,8 %, 0,1 bis 0,5 Gew.-%, 0,2 bis 1 Gew.-%, 0,2 bis 0,8 Gew.-%, 0,2 bis 0,5 Gew.-%, 0,25 bis 5 Gew.-%, 0,25 bis 0,8 Gew.-%, 0,25 bis 0,5 Gew.-%, 0,3 bis 1 Gew.-%, 0,3 bis 0,8 Gew.-% oder 0,3 bis 0,5 Gew.-% und ein Additiv, das aus der Gruppe ausgewählt ist, bestehend aus Harzen, natürlichem Kautschuk, synthetischen Kautschuken und Kombinationen davon in einer Menge von 5 bis 40 Gew.-%, vorzugsweise 5 bis 20 Gew.-%, in einer Wachsmatrix umfasst.

2. Zusammensetzung nach Anspruch 1,
**dadurch gekennzeichnet, dass** die Wachsmatrix 5 bis 20 Gew.-% Polyisobutylene, 0 bis 30 Gew.-% Vaseline, 0 bis 25 Gew.-% Harze, 5 bis 70 Gew.-% Paraffin- und Fischer-Tropsch-Wachse umfasst.

3. Zusammensetzung nach Anspruch 1,
**dadurch gekennzeichnet, dass** die Wachsmatrix 5 bis 20 Gew.-% Polyisobutylene, 0 bis 20 Gew.-% Vaseline, 5 bis 80 Gew.-% Harze, 0 bis 5 Gew.-% Paraffin- und Fischer-Tropsch-Wachse umfasst.

4. Verfahren zur Herstellung der Zusammensetzung nach den Ansprüchen 1 bis 3, **dadurch gekennzeichnet, dass** es die folgenden Schritte umfasst:
i) gemeinsames Schmelzen der Wachsmatrix-Komponenten,
ii) Erwärmen der Schmelze auf 120 bis 150 °C,
iii) optionales Zusetzen eines fluorierten Wachses und/oder eines trockenen Gleitmittels unter Rühren,
iv) Zusetzen von Graphen in Teilen unter kräftigem Rühren,
iv) Abkühlen der Zusammensetzung.

5. Verwendung der Zusammensetzung nach den Ansprüchen 1 bis 4 als Skiwachs.

## Revendications

1. Composition de fart, **caractérisée en ce qu'**elle comprend du graphène à une concentration de 0,05 à 1 % en poids, de 0,1 à 1 % en poids, de 0,1 à 0,8 %, de 0,1 à 0,5 % en poids, de 0,2 à 1 % en poids, de 0,2 à 0,8 % en poids, de 0,2 à 0,5 % en poids, de 0,25 à 5 % en poids, de 0,25 à 0,8 % en poids, de 0,25 à 0,5 % en poids, de 0,3 à 1 % en poids, de 0,3 à 0,8 % en poids ou de 0,3 à 0,5 % en poids, et un additif choisi dans le groupe constitué par les résines, le caoutchouc naturel, les caoutchoucs synthétiques et leurs combinaisons en une quantité de 5 à 40 % en poids, de préférence de 5 à 20 % en poids dans une matrice de cire.

2. Composition selon la revendication 1, **caractérisée en ce que** la matrice de cire comprend des polyisobutylènes à raison de 5 à 20 % en poids, de la Vaseline à raison de 0 à 30 % en poids, des résines à raison de 0 à 25 % en poids, des cires de paraffine et des cires Fischer-Tropsch à raison de 5 à 70 % en poids.

3. Composition selon la revendication 1, **caractérisée en ce que** la matrice comprend des polyisobutylènes à raison de 5 à 20 % en poids, de la Vaseline à raison de 0 à 20 % en poids, des résines à raison de 5 à 80 % en poids, des cires de paraffine et des cires Fischer-Tropsch à raison de 0 à 5 % en poids.

4. Procédé de préparation de la composition selon les revendications 1 à 3, **caractérisé en ce qu'**il comprend les étapes suivantes :
i) co-fusion des composants de la matrice de cire,
ii) chauffage de la masse fondue à 120-150 °C,
iii) éventuellement addition d'une cire fluorée et/ou d'un lubrifiant sec sous agitation,
iv) addition de graphène par portions sous forte agitation,
v) refroidissement de la composition.

5. Utilisation de la composition selon les revendications 1 à 4 en tant que fart.
